# NEUE EUROPÄISCHE PATENTSCHRIFT

(11) **EP 0 420 107 B2**
(45) Veröffentlichungstag und Bekanntmachung des Hinweises auf die Entscheidung über den Einspruch: **22.10.1997**
(45) Hinweis auf die Patenterteilung: 16.02.1994
(21) Anmeldenummer: 90118314.5
(22) Anmeldetag: 24.09.1990
(51) Int. Cl.: G01N 27/406

(54) **Feststoff-Sauerstoffsensor**
Oxygen sensor with solid electrolyte
Détecteur d'oxygène à électrolyte solide

(30) Priorität: 25.09.1989 LU 87596
(43) Veröffentlichungstag der Anmeldung: 03.04.1991
(73) Patentinhaber: EUROPÄISCHE WIRTSCHAFTSGEMEINSCHAFT (E.W.G.), L-2920 Luxemburg (LU)
(72) Erfinder: Manes, Livio, I-21100 Varese (IT); Mari, Claudio Maria, I-0129 Milano (IT)
(74) Vertreter: Weinmiller, Jürgen

(56) Entgegenhaltungen:
- EP-A- 0 006 989
- EP-A- 0 008 430
- EP-A- 0 188 868
- EP-A- 0 239 771
- DE-A- 2 738 756
- DE-A- 2 852 638
- DE-A- 3 112 739
- FR-A- 2 511 154
- D.Janke, Ionenleiter, Keramische Zeitschrift 39, 1987, 8, Seiten 1-4

## Beschreibung

Die Erfindung bezieht sich auf einen Feststoff-Sauerstoffsensor in Form einer elektrolytischen Zelle, mit einer der Atmosphäre mit dem zu messenden Sauerstoffpartialdruck ausgesetzten ersten Elektrode, einer einer Referenzatmosphäre ausgesetzten zweiten Elektrode und einem Feststoffelektrolyten in Flächenkontakt mit beiden Elektroden, wobei das Material des Elektrolyten ein keramisches Oxid oder eine glasartige Phase mit reiner Ionenleitung ist und zumindest die erste Elektrode ein nicht-stöchiometrisches keramisches Oxid enthält. Unter einen nicht-stöchiometrischen Oxid versteht man ein thermisch stabiles System mit einer deutlichen Abweichung von der stöchiometrischen Zusammensetzung. Nachfolgend werden hierunter sowohl unterstöchiometrische als auch überstöchiometrische Systeme verstanden.

Ein derartiger Sauerstoffsensor ist aus der DE-32 29 931 A1 bekannt. Die beiden Elektroden dieses Sensors werden von nicht-stöchiometrischen Oxiden oder Mischungen solcher Stoffe gebildet, z.B. PrO₂₊ₓ, CeO₂₋ₓ, TbO₂₋ₓ. Der Feststoffelektrolyt ist ein keramisches Oxid oder eine Glasphase mit reiner lonenleitfähigkeit. Solche Sensoren (PrO₂₊ₓ wird in oxidierender und CeO₂₋ₓ oder TbO₂₋ₓ in reduzierender Atmosphäre als Elektroden-Material eingesetzt) sind jedoch jeweils nur für enge Meßbereiche verwendbar.

Aus DE-A-3 112 739 ist weiterhin eine strukturstabile Elektrode für Festelektrolyte bekannt, bei der die Elektrode als metallische Komponente Silber und/oder Palladium oder Edelmetalllegierungen in denen Silber und/oder Palladium den Hauptbestandteil neben Platin oder Rhodium bilden, enthält; weiterhin ist als elektronenleitender nichtmetallischer Feststoff ein Oxid, vorzugsweise vom Perowskittyp, Siliciumcarbid oder Molybdändisilicid enthalten.

Hierbei hat man zudem mit einer Vergiftung der Elektroden insbesondere durch Kohlenmonoxid oder durch Blei zu rechnen, so daß ein solcher Sensor, der zur Überwachung von Kohlenmonoxid enthaltenden Atmosphären oder von Abgasemissionen benutzt wird, infolge von Vergiftungserscheinungen nur eine beschränkte Betriebsdauer hat.

Aufgabe der Erfindung ist es also, einen Feststoff-Sauerstoffsensor zu entwickeln, der die Messung eines breiten Bereichs von Sauerstoff-Partialdrücken erlaubt, und zwar sowohl in sehr reduzierender als auch in sehr oxidierenderAtmosphäre und ohne erheblichen Verlust an Empfindlichkeit oder Inkaufnahme einer längeren Ansprechzeit. Die Verlängerung der Betriebszeit der Elektrode bedeutet einen sehr hohen wirtschaftlichen Gewinn, da es dadurch möglich wird, ein und dieselbe Elektrode für die Messung sich plötzlich ändernder Sauerstoffpartialdrücke - wie dies im Betrieb oder zufälligerweise vorkommen mag - zu verwenden.

Diese Aufgabe wird erfindungsgemäß durch den in Anspruch 1 definierteh Sauerstoffsensor gelöst.

Vorzugsweise beträgt das Metallgewicht in der ersten Elektrode zwischen 10 und 30%, insbesondere 20% des Gesamtgewichts.

Nachfolgend wird die Erfindung an Hand einiger Ausführungsbeispiele näher erläutert.

Ein Feststoff-Sauerstoffsensor besteht im wesentlichen aus zwei Elektroden, zwischen denen sich ein Feststoffelektrolyt befindet. Die Elektroden sind mit einem Meßkreis verbunden, wobei die Spannungsdifferenz zwischen den beiden Elektroden ein Maß für den Unterschied des Sauerstoffpartialdrucks ist, der auf je eine der beiden Elektroden einwirkt.

Oft wird der Sensor als einseitig geschlossenes Röhrchen geformt, dessen Innenwand die Referenzelektrode und dessen Außenwand die Meßelektrode bildet. Der Zwischenwandbereich wird vom Feststoffelektrolyten wenigstens teilweise ausgefüllt. Im Inneren des Röhrchens befindet sich ein Referenzgas gegebener Zusammensetzung, wie z.B. reiner Sauerstoff, Luft oder eine bekannte Gasmischung, wie CO/CO₂ oder H₂/H₂O. Die Referenzatmosphäre kann auch durch eine Mischung von Metallen und Metalloxiden wie Fe/FeO oder Ni/NiO gebildet werden.

Das Äußere des Röhrchens unterliegt der Atmosphäre, deren Sauerstoffpartialdruck gemessen werden soll.

Natürlich ist die Erfindung nicht auf diese Form des Sensors beschränkt Der Sensor könnte vielmehr auch als ebenes Plättchen vorliegen, das die Trennung zwischen zwei Kammern bildet, nämlich einer Referenzkammer und einer Meßkammer.

Die Referenzelektrode kann wie im Fall der obengenannten Druckschrift aus einem Edelmetall oder einem keramischen Oxid gebildet werden oder aus einer Mischung davon.

Die der zu analysierenden Atmosphäre zugewandte Elektrode besteht erfindungsgemäß aus einer Mischung mindestens eines nicht-stöchiometrischen keramischen Oxids und eines Metalls, wobei letzteres aus der von Gold, Platin, Nickel und Chrom gebildeten Gruppe ausgewählt wird und das keramische Oxid aus der Gruppe gewählt wird, die folgende Stoffe enthält PrO₂₊ₓ, CeO₂₋ₓ, TbO₂₊ₓ. Es ist auch möglich, den Metallen zwei verschiedene keramische Oxide beizumischen, von denen das eine über- und das andere unterstöchiometrisch ist, beispielsweise CeO₂₋ₓ und PrO₂₊ₓ. Dadurch trägt man sowohl einer sehr stark reduzierenden als auch einer sehr stark oxidierenden Atmosphäre Rechnung. Weiterhin ist es auch möglich, feste Lösungen dieser Oxide zu verwenden, zum Beispiel Ce_{y}Pr_{1-y}O₂₊ₓ. Für x wird dabei ein Wert zwischen 0 und 0,2 gewählt. Eine Mischung aus Keramik und Metallen wird "cermet" genannt.

Der erfindungsgemäße Sauerstoffsensor findet eine weite Anwendung bei der Überwachung metallurgischer Prozesse, beim Betrieb von Dampfturbinen und Öfen, bei der Abgaskontrolle von Kraftfahrzeugen und bei der Luftüberwachung. Der Meßbereich für den Sauerstoffpartialdruck kann zwischen 10⁻³⁰ und 1 atm. liegen.

## Patentansprüche

1. Feststoff-Sauerstoffsensor in Form einer elektrolytischen Zelle, mit einer der Atmosphäre mit dem zu messenden Sauerstoffpartialdruck ausgesetzten ersten Elektrode, einer einer Bezugsatmosphäre ausgesetzten zweiten Elektrode und einem Feststoffelektrolyten in Flächenkontakt mit beiden Elektroden, wobei das Material des Elektrolyten ein keramisches Oxid oder eine glasartige Phase mit reiner Ionenleitung ist und zumindest die erste Elektrode ein nicht-stöchiometrisches keramisches Oxid enthält, dadurch gekennzeichnet, daß die erste Elektrode aus einer Mischung (CERMET) mindestens eines nicht-stöchiometrischen keramischen Oxids und eines Metalls besteht, wobei letzteres aus der von Gold, Platin, Nickel und Chrom gebildeten Gruppe ausgewählt wird und das keramische Oxid aus der Gruppe gewählt wird, die folgende Stoffe enthält: PrO₂₊ₓ, TbO₂₋ₓ, CeO₂₋ₓ, wobei 0 ≤ x ≤ 0,2 gewählt wird, oder mechanische Mischungen eines unter- und eines überstöchiometrischen Oxides, oder eine feste Lösung dieser beiden.

2. Feststoff-Sauerstoffsensor nach Anspruch 1, dadurch gekennzeichnet, daß das Metallgewicht in der ersten Elektrode zwischen 10 und 30% des Gesamtgewichts beträgt.

## Claims

1. A solid oxygen sensor consisting of an electrolytical cell, with a first electrode exposed to the atmosphere whose partial oxygen pressure is to be measured, a second electrode exposed to a reference atmosphere and a solid electrolyte in surface contact with both electrodes, the material of the electrolyte being a ceramic oxide or a vitreous phase with pure ion conduction, and at least the first electrode containing a non-stoichiometric ceramic oxide, characterized in that the first electrode consists of a mixture (CERMET) of at least one non-stoichiometric ceramic oxide and a metal, the latter being chosen from the group constituted by gold, platinum, nickel and chromium, and the ceramic oxide being chosen from the group containing the following compounds: PrO₂₊ₓ, TbO₂₋ₓ, CeO₂₋ₓ, with 0 ≤ x ≤ 0.2, or mechanical mixtures of a sub- and an over-stoichiometric oxide or a solid solution of both.

2. A solid oxygen sensor according to claim 1, characterized in that the metal weight in the first electrode lies between 10 and 30% of the total weight.

## Revendications

1. Détecteur solide d'oxygène en forme d'une cellule électrolytique, comprenant une première électrode exposée à l'atmosphère dont la pression partielle d'oxygène est à mesurer, une seconde électrode exposée à une atmosphère de référence et un électrolyte solide en contact de surface avec les deux électrodes, la matière de l'électrolyte étant un oxyde céramique ou une phase vitreuse avec conduction pure d'ions, et au moins la première électrode contenant un oxyde céramique non-stoechiométrique, caractérisé par le fait que la première électrode est composée par un mélange (CERMET) d'au moins un oxyde céramique non-stoechiométrique et d'un métal, ce dernier étant choisi parmi les membres du groupe constitué par l'air, le platine, le nickel et le chrome, et que l'oxyde céramique est choisi des membres du groupe comprenant les composés suivants: PrO₂₊ₓ, TbO₂₋ₓ, CeO₂₋ₓ, avec 0 ≤ x ≤ 0,2, ou des mélanges mécaniques d'un oxyde sous-stoechiométrique et d'un oxyde surstoechiométrique ou d'un solution solide des deux.

2. Détecteur solide d'oxygène selon la revendication 1, caractérisé en ce que le poids du métal dans la première électrode s'élève à entre 10 et 30% du poids total.
